Europäisches Patentamt

European Patent Office

Office européen des brevets

(11) Veröffentlichungsnummer: **0 133 953**
**B1**

(12) **EUROPÄISCHE PATENTSCHRIFT**

(45) Veröffentlichungstag der Patentschrift:
28.10.87

(21) Anmeldenummer: **84108802.4**

(22) Anmeldetag: **25.07.84**

(51) Int. Cl.⁴: **C 04 B 28/34** // (C04B28/34,
14:06, 14:08, 14:10, 20:00, 22:00,
24:36)

(54) **Einkomponenten-Alkalisilikat-Zementzusammensetzung.**

(30) Priorität: **28.07.83 DE 3327176**

(43) Veröffentlichungstag der Anmeldung:
**13.03.85 Patentblatt 85/11**

(45) Bekanntmachung des Hinweises auf die Patenterteilung:
**28.10.87 Patentblatt 87/44**

(84) Benannte Vertragsstaaten:
**AT BE DE FR GB**

(56) Entgegenhaltungen:
**DE - A - 1 571 485**
**FR - A - 2 449 661**
**US - A - 3 138 471**

(73) Patentinhaber: **HOECHST AKTIENGESELLSCHAFT,
Postfach 80 03 20, D-6230 Frankfurt am Main 80 (DE)**

(72) Erfinder: **Ernst, Josef, Waldstrasse 20,
D-6239 Eppstein/Taunus (DE)**
Erfinder: **Semmler, Hans-Joachim, Dr.,
Schwedenstrasse 41, D-6203 Hochheim am Main (DE)**

### Beschreibung

Die vorliegende Erfindung betrifft eine trokkene, tensidfreie Einkomponenten-Alkalisilikat-Zementzusammensetzung, die zur Herstellung von säurefesten Kitten und säurefesten Mörtelmassen, aber auch zum Aufbringen mittels Betonspritzmaschinen, insbesondere nach dem Torkret-Verfahren, geeignet ist.

Einkomponenten-Zementzusammensetzungen, die zur Herstellung von säurefesten Kitten und beim Torkret-Verfahren verwendbar sind, können gemäss DE-B-15 71 485 auf Basis von trockenem Natronwasserglas und einem Aluminiumphosphathärter erzeugt werden. Analoge Gemische auf Basis von Kaliumsilikat (festes Kaliwasserglas) und einem Aluminiumphosphathärter sind Gegenstand der DE-A-30 06 551.

Die genannten säurefesten Kitte können nicht nur zum Aufbringen mittels Betonspritzmaschinen, sondern auch zum Vermauern, Verfugen und Verlegen von säurefesten Steinen dienen. Das Festwerden der Kitte beruht auf der Bildung von Kieselsäure bei der Reaktion von Wasserglas mit Säure, die aus dem Aluminiumphosphathärter durch Zugeben von Wasser gebildet wird.

Wesentlich ist, dass bei den bekannten Mischungen das Silikat pulverförmig vorliegt, also leicht reaktionsfähig ist. Nötig sind ferner grössere Anteile von säurefesten Füllstoffen, wie z.B. Quarzsand.

Gemäss DE-A-30 06 551 muss die Zement-Zusammensetzung sowohl ein Mineralöl (zum Hydrophobieren der Mischung) wie auch ein Tensid enthalten. Der Tensid-Gehalt kann jedoch beim Verarbeiten nach dem Torkret-Verfahren zu Rutscheffekten führen.

Da die Tenside bei höherer Temperatur zerfallen, verringern sie die Temperaturbeständigkeit der säurefesten Kitte und verschlechtern die Feuerfest-Eigenschaften. Schliesslich besitzen die Kitte des Standes der Technik manchmal nur eine geringe Geschmeidigkeit.

Bestimmte Kitte weisen nur eine geringe Standfestigkeit auf, das heisst, beim Aufmauern neigen sie dazu unter dem Druck der Steine aus den Fugen herauszulaufen.

Die bisher üblichen trockenen Einkomponenten-Alkalisilikat-Zementzusammensetzungen enthielten mindestens teilweise feine quarzhaltige Bestandteile (Quarzstaub). Sie enthielten ferner Quarzsand, wobei Sande mit einer ausgesprochen eckigen Struktur bevorzugt wurden. Diese eckigen Sande werden durch Zerstossen hergestellt. Sowohl die gebrochenen Sande wie die Quarzmehle enthalten aber auch Teilchen mit Grössen im Bereich der silikogenen Stäube. Damit entsteht für die Verarbeiter der Mischungen, insbesondere nach dem Torkret-Verfahren, ein hohes Sicherheitsrisiko.

Es bestand daher die Aufgabe, eine neue Einkomponenten-Zementzusammensetzung auf Basis von Alkalisilikaten zu entwickeln, die die Nachteile der bekannten Mischungen nicht aufweist, keine Anteile an silikogenem Quarzstaub enthält und doch gute mechanische und thermische Eigenschaften aufweist.

Es wurde nun eine trockene, tensidfreie Einkomponenten-Alkalisilikat-Zementzusammensetzung gefunden, die diese Forderungen erfüllt und die gekennzeichnet ist durch die folgenden Bestandteile:

a) Metallphosphat-Härter in Mengen von 2–10 Gew.-%,

b) abgerundeter Quarzsand mit einer Korngrösse zwischen etwa 0,03 und 0,5 mm in Mengen von 30–70 Gew.-%,

c) Ton in Mengen von 10–40 Gew.-%,

d) Kieselgur in Mengen von 1–5 Gew.-%,

e) Mineralöl in Mengen von 0,05–1 Gew.-% und

f) festes gepulvertes Natrium- oder Kaliumwasserglas oder deren Gemische in Mengen von 10–25 Gew.-%.

Als Metallphosphat-Härter können eingesetzt werden kondensierte Aluminiumphosphate gemäss DE-C-1 25 28 35 oder kondensierte Eisen/Aluminium-Phosphate gemäss DE-A-31 33 354. Die verwendeten Tonbestandteile sollen trocken sein. Bevorzugt ist kaolinitischer Ton. Das eingesetzte Kieselgur ist vorzugsweise nicht kalziniert. Das Molverhältnis $SiO_2$/Alkalimetalloxid soll im Falle des Kaliwasserglases etwa 1–1,5 und im Falle des Natronwasserglases 2,0 bis 3,3 betragen. Pro Gewichtsteil Phosphat-Härter werden etwa 2,5 bis 3,5 Teile Natronwasserglas oder 3,5 bis 4,5 Gewichtsteile Kaliwasserglas benötigt.

Bei den eingesetzten runden Quarzsanden soll das sogenannte Eckigkeitsverhältnis unter 1,5, vorzugsweise unter 1,4, liegen. Unter Eckigkeitsverhältnis versteht man das Verhältnis der praktisch ermittelten Oberfläche zur theoretisch ermittelten Oberfläche, wobei als theoretische Oberfläche die aus dem Kornspektrum errechnete Oberfläche von kugelförmigen Teilchen gleichen Volumens angenommen wird.

Eine erfindungsgemässe trockene Einkomponenten-Zementzusammensetzung kann wie folgt hergestellt werden:

Ausgewählte Quarzsande mit einer mittleren Körnung von 0,23 bis etwa 0,1 mm werden gemeinsam mit dem Phosphat-Härter, dem Ton und dem Kieselgur sorgfältig vermischt und mit einer geringen Menge Maschinenöl bedüst. Getrennt davon wird eine Mischung aus Wasserglaspulver der gewünschten Qualität ebenfalls mit einer kleinen Menge Maschinenöl bedüst. Anschliessend werden die beiden bedüsten Teile vorsichtig vermischt. Die getrennte Bedüsung dient dazu, die Oberfläche des Alkalisilikats von der Oberfläche des aktiven Phosphat-Härters zu trennen. Verwendete Mineralöle, normalerweise übliche Maschinenöle, müssen deshalb sowohl gegenüber dem Alkalisilikat als auch gegenüber dem eingesetzten Phosphathärter inert sein. Jedes übliche Mineralöl erfüllt jedoch diese Anforderung.

Wenn die erfindungsgemässe Zementzusammensetzung nach dem Torkret-Verfahren verarbeitet werden soll, so ist es bevorzugt, wenn der abgerundete Quarzsand Korngrössen zwischen 0,06 und 0,32 mm, insbesondere 0,1 und 0,23 mm aufweist. In diesem Fall sind Quarzsand-Mengen zwischen 35 und 60%, insbesondere jedoch zwischen 40 und 58 Gew.-% bevorzugt. Bei der Auswahl des abgerundeten Quarzsandes, des Tones und des Kieselgurs ist darauf zu achten, dass praktisch keine Feinteile unter 30 $\mu$m enthalten sind, da diese als silikogener Staub wirken könnten.

Beim Torkret-Verfahren wird ein schnell abbindender wasserhaltiger Einkomponenten-Zement in Dicken von etwa 1 bis 3 cm auf horizontale, geneigte, oder vertikale Oberflächen aufgetragen, wo er erstarrt. Der wasserhaltige Zement wird hergestellt, indem man trockenen Alkalisilikat-Zement in das Beschickungsabteil einer Betonkanone oder Betonspritzmaschine einfüllt, das Beschickungsabteil mittels Druckluft unter Druck setzt, den trockenen Zement in abgemessenen Mengen von dem Beschickungsabteil mittels eines Materialzuführungsschlauches zu der Spritzmaschinendüse überführt, Spritzwasser von einer unter Druck stehenden Wasserzuleitung in die Spritzmaschinendüse einführt, um dort das Wasser mit dem Zement zu mischen. Die Mischung aus Alkalisilikat-Zement und Wasser wird, z.B. mittels eines Schlauches, auf entsprechend vorbereitete ausgewählte Oberflächen aufgebracht. Der Zement benötigt mehrere Minuten, um auf den Oberflächen abzubinden. Bei Einsatz der erfindungsgemässen Einkomponenten-Alkalizemente, sind die Beschichtungen säurebeständig und sehr gut temperaturwechselbeständig.

Der Einsatz der erfindungsgemässen trockenen Einkomponenten-Alkalisilikat-Zementzusammensetzung ist besonders interessant zur Herstellung korrosionsverhindernder Schutzschichten auf Stahloberflächen die höheren Temperaturen ausgesetzt werden. Solche Schutzschichten werden als Innenauskleidungen bei Quenchen in Müllverbrennungsanlagen, Cowpern (Winderhitzern bei Hochöfen), Heisswindleitungen sowie in Gaskühlern erfolgreich verwendet. Die Cowper haben in der Regel etwa 10 m Durchmesser und 50 m Höhe. Zur Beschichtung wird zunächst die gesamte innere Stahlfläche gereinigt, anschliessend wird ein Zement/Wasser-Gemisch maschinell von oben nach unten aufgetragen, wobei Trockenförderspritzmaschinen eingesetzt werden. Diese Maschinentypen erlauben kontinuierliches, gleichmässiges Spritzen und lassen ein Arbeiten ohne Unterbrechungen zu. Die gesamte Spritzschicht wird bei Cowpern ca. 8 bis 12 mm dick aufgetragen. Ähnlich kann die Innenauskleidung von Kaminköpfen, die aus Stahl bestehen, mit Hilfe der erfindungsgemässen Zementzusammensetzung erfolgen.

Die Menge des (nicht an der Stahloberfläche klebenden) Rückprallgutes, der Staubanfall und die Verdichtung der Spritzschicht sind abhängig vom Spritzdruck. Der Spritzdruck an der Düse ist abhängig von der Länge und der hydrostatischen Höhe des Materialtransportschlauches. Die Menge des Rückprallgutes ist ferner abhängig von der Materialzusammensetzung, der Spritzmaschine, der Haftfähigkeit des Untergrundes der Be- und Entlüftung der Arbeitsstätte und der Gleichmässigkeit des Auftragens, also der Erfahrung des Bedienungspersonals. Die Wassermenge muss gleichmässig und sorgfältig dosiert werden, damit sich keine Nester bilden, die sich durch unterschiedliche Verteilung von Wasser und festen Anteilen auszeichnen. Zwischen Aufbringen der Spritzschicht und Aushärten sind Erschütterungen zu vermeiden, da sonst die Gefahr besteht, dass das Material noch nass abrutscht, bzw. nach einigen Tagen Enthaftung der abgebundenen Beschichtung auftritt.

Die Erfindung wird durch die folgenden Beispiele näher erläutert.

Beispiel 1

Die folgenden trockenen Einkomponenten-Ansatzmischungen werden mit Wasser versetzt und zu Kitten verarbeitet. An den abgebundenen Kitten wurden Säurebeständigkeit, Wasserfestigkeit und mechanische Werte bestimmt. Die gefundenen Resultate decken sich weitgehend mit den Ergebnissen gemäss DE-A-15 71 485, Seite 9.

Mischung 1

17,0 Masse-% Wasserglaspulver (27 Gew.-% $Na_2O$, 54% $SiO_2$, 19% $H_2O$)

0,3 Masse-% Maschinenöl

20,0 Masse-% Ton feinst

2,0 Masse-% Kieselgur

5,7 Masse-% Härter gemäss DE-PS 12 52 835

55,0 Masse-% Quarzsand*

*Der Quarzsand setzt sich aus abgerundeten und gewaschenen Sanden mit mittlerer Körnung 0,15 mm und mit mittlerer Körnung 0,23 mm etwa im Verhältnis 1:2 zusammen. Das Eckigkeitsverhältnis liegt unter 1,4.

Mischung 2

13,6 Masse-% Wasserglaspulver (27% $Na_2O$, 54% $SiO_2$, 19% $H_2O$)

3,4 Masse-% Wasserglaspulver (28% $K_2O$, 56% $SiO_2$, 16% $H_2O$)

0,3 Masse-% Maschinenöl

23,0 Masse-% Ton feinst

2,0 Masse-% Kieselgur

6,0 Masse-% Härter gemäss DE-PS 12 52 835

51,7 Masse-% Quarzsand von Mischung 1

Die Mischung 1 wird wie folgt angemischt:

100 Gew.-Teile trockene Einkomponenten-Ansatzmischung

14 Gew.-Teile Wasser

Die Mischung 2 wird wie folgt angemischt:

100 Gew.-Teile trockene Einkomponenten-Ansatzmischung

15–16 Gew.-Teile Wasser

Die Kittmassen sind gut verarbeitbar, lassen sich gut vermauern und sind gegenüber anderen vergleichbaren Kitten standfest, d.h. die Kittmasse wird nicht durch das Gewicht des Mauersteins aus der Fuge gedrückt. Dadurch ist ein effektiveres Arbeiten möglich. Besondere Vorsichtsmassnahmen gegen die Verwirbelung von silikogenem Staub sind nicht erforderlich, da kein Quarzfeinstaub in den trockenen Ansatzmischungen erhalten ist.

Beispiel 2

Gemäss folgender Rezeptur wird eine trockene Einkomponenten-Ansatzmischung hergestellt:

17,0 Masse-% Wasserglaspulver (28% $K_2O$, 56% $SiO_2$, 16% $H_2O$)

0,3 Masse-% Maschinenöl

0,3 Masse-% Stuckgips

5,4 Masse-% Härter

1,0 Masse-% Kieselgur

16,0 Masse-% Ton fein

60,0 Masse-% Quarzsand von Beispiel 1

Diese trockene Ansatzmischung wird in den Trichter einer Spritzmaschine (Rotormaschine mit Revolversystem vom Typ Aliva-242 der Aliva AG, Widen, Schweiz) eingefüllt und über einen Rührstern zum Rotor geführt. Die Rotorkammern transportieren die noch pulverförmige Mischung zum Auslauf, wo sie mit einem Luftstrom zur Düse geführt wird. In der Spritzdüse werden zu 100 Gew.-Teilen pulverförmiger Mischung unter einem Druck von 3 bis 4 bar 18 bis 20 Gew.-Teile Wasser eindosiert und vermischt. Der Kitt wird durch die Druckluft, die auf das Beschickungsabteil aufgegeben wird, auf die zu beschichtende sandgestrahlte Blechwand in einem Arbeitsgang aufgesprüht. Der Kitt erhärtet innerhalb von 24 Stunden bei 20 °C. Für die Beschichtung von 1 m² Fläche werden bei einer Schichtdicke von 10 mm etwa 18 kg der trockenen Ansatzmischung sowie ca. 3,4 kg Wasser benötigt. Die so behandelte Stahloberfläche mit der Beschichtung von 1–2 cm ist beständig gegen organische und anorganische Säuren mit Ausnahme von Flussäure und konz. Phosphorsäure bei sehr hohen Temperaturen. Ferner ist dieser Überzug gegen Öle, Lösemittel und Fette sowie Oxidantien beständig. Stark alkalische Beanspruchung wird nicht ertragen. Die Temperaturwechselbeständigkeit dieser Beschichtungen ist höher als die von vergleichbaren Beschichtungen gemäss DE-A 30 06 551.

Beispiel 3

Eine erfindungsgemässe Ansatzmischung von Beispiel 2 wird bezüglich einiger anwendungstechnischer Daten mit einer bekannten Mischung (DE-B-15 71 485, Ansatzmischung 1) verglichen. Hierzu werden beide Mischungen mit Wasser zu Kitten verarbeitet und aus den Kitten Zylinder mit Durchmesser und Höhe von je 2,5 cm hergestellt. Die Daten werden nach ca. 60 Stunden Lagerung der Zylinder bei Raumtemperatur und zusätzlicher 16-stündiger Lagerung bei 60 °C gewonnen.

|  | Ansatzmischung gemäss Beispiel 1 | bekannte Ansatzmischung |
|---|---|---|
| Wasseraufnahme | 0,5±0,3% | 4,5±1,2% |
| Raumgewicht | 1,9 g/cm³ | 1,7 g/cm³ |
| offene Porosität | 0,8±0,4% | 8±2% |
| Frühdruckfestigkeit | 26,4 N/mm² | 14,9 N/mm² |

## Patentansprüche

1. Trockene, tensidfreie Einkomponenten-Alkalisilikat-Zementzusammensetzung, gekennzeichnet durch die folgenden Bestandteile:

a) Metallphosphat-Härter in Mengen zwischen 2–10 Gew.-%

b) abgerundeter Quarzsand mit einer Korngrösse zwischen etwa 0,03 und 0,5 mm in Mengen von 30–70 Gew.-%,

c) Tonbestandteile in Mengen von 10–40 Gew.-%,

d) Kieselgur in Mengen von 1–5 Gew.-%,

e) Mineralöl in Mengen von 0,05–1 Gew.-%,

f) festes gepulvertes Natrium- oder Kaliumwasserglas oder deren Gemische in Mengen von 10–25 Gew.-%.

2. Zusammensetzung nach Anspruch 1, dadurch gekennzeichnet, dass abgerundeter Quarzsand mit einer Korngrösse zwischen 0,06 und 0,32 mm eingesetzt wird.

3. Zusammensetzung nach Anspruch 1 oder 2, dadurch gekennzeichnet, dass abgerundeter Quarzsand in Mengen zwischen 35 und 60 Gew.-%, vorzugsweise zwischen 40 und 58 Gew.-% eingesetzt wird.

4. Zusammensetzung nach Anspruch 1, dadurch gekennzeichnet, dass das Eckigkeitsverhältnis des eingesetzten Quarzsandes unter 1,5 liegt.

5. Zusammensetzung nach Anspruch 1, dadurch gekennzeichnet, dass als Metallphosphat-Härter kondensiertes Aluminiumphosphat oder kondensiertes Eisen/Aluminiumphosphat eingesetzt wird.

6. Verfahren zum Auftragen eines säurebeständigen, schnell abbindenden Einkomponenten-Zements auf ausgewählte Oberflächen, wobei man einen Einkomponenten-Alkalisilikat-Zement in das Beschickungsabteil einer Betonkanone bzw. Betonspritzmaschine füllt, das Beschickungsabteil mittels Druckluft unter Druck setzt, den trockenen Zement in abgemessenen Mengen von dem Beschickungsabteil mittels eines Materialzuführungsschlauches zu der Spritzmaschinendüse überführt, Spritzwasser von einer unter Druck stehenden Wasserzuleitung in die Spritzmaschinendüse einführt, um das Wasser mit dem Zement zu mischen, die Mischung aus Alkalisilikat-Zement und Wasser auf die ausgewählte Oberfläche aufbringt und den Zement abbinden lässt, dadurch gekennzeichnet, dass man den Einkomponenten-Alkalisilikat-Zement gemäss Anspruch 1 einsetzt.

**Revendications**

1. Composition de ciment à base de silicates de métaux alcalins, à une seule composante, sèche et dépourvue de surfactifs, composition caractérisée par les constituants suivants:

a) des phosphates métalliques durcisseurs en des quantités de 2 à 10% en poids,

b) du sable quartzeux à particules arrondies présentant une granularité comprise entre environ 0,03 et 0,5 mm, en des quantités de 30 à 70% en poids,

c) des constituants argileux en des quantités de 10 à 40% en poids,

d) du kieselgur en des quantités de 1 à 5% en poids,

e) une huile minérale en des quantités de 0,05 à 1% en poids,

f) du verre soluble sodique ou patassique solide en poudre, ou des mélanges de ces composés, en des quantités de 10 à 25% en poids.

2. Composition selon la revendication 1 caractérisée en ce que le sable à particules arrondies présente une granularité comprise entre 0,06 et 0,32 mm.

3. Composition selon l'une des revendications 1 et 2, caractérisée en ce que le sable à particules arrondies est mis en jeu en des quantités comprises entre 35 et 60% en poids, de préférence entre 40 et 58% en poids.

4. Composition selon la revendication 1 caractérisée en ce que le rapport d'angularité du sable quartzeux mis en jeu est inférieur à 1,5.

5. Composition selon la revendication 1 caractérisée en ce que le phosphate métallique durcisseur est un phosphate d'aluminium condensé ou un phosphate de fer/aluminium condensé.

6. Procédé pour appliquer, sur des surfaces choisies, un ciment à une seule composante, stable aux acides et à prise rapide, procédé selon lequel on place un ciment à base de silicates de métaux alcalins à une seule composante dans le compartiment d'alimentation d'un canon à béton ou d'une machine de projection de béton, on met le compartiment d'alimentation sous pression au moyen d'air comprimé, on fait passer le ciment sec, en des quantités dosées, du compartiment d'alimentation au gicleur de la machine de projection par un tuyau assurant la conduite de la matière, on injecte de l'eau projetée, par une conduite d'eau sous pression, dans le gicleur de la machine de projection pour mélanger l'eau avec le ciment, on applique le mélange constitué du ciment de silicates de métaux alcalins et d'eau sur la surface choisie et on laisse prendre le ciment, ce procédé étant caractérisé en ce qu'on utilise le ciment de silicates de métaux alcalins à une seule composante qui a été défini à la revendication 1.

**Claims**

1. A dry surfactantfree one-component alkali metal silicate cement composition which contains the following components:

a) metal phosphate hardener in amounts of 2–10% by weight

b) rounded quartz sand having a grain size between about 0.03 and 0.5 mm in amounts of 30–70% by weight,

c) clay constituents in amounts of 10–40% by weight,

d) kieselgur in amounts of 1–5% by weight,

e) mineral oil in amounts of 0.05–1% by weight and

f) solid pulverulent sodium silicate, potassium silicate or mixtures thereof in amounts of 10–25% by weight.

2. The composition as claimed in claim 1, wherein the rounded quartz sand has a grain size between 0.06 and 0.32 mm.

3. The composition as claimed in claim 1 or 2, wherein the rounded quartz sand is used in amounts beween 35 and 60% by weight, preferably between 40 and 58% by weight.

4. The composition as claimed in claim 1, wherein the angularity ratio of the quartz sand used is less than 1.5.

5. The composition as claimed in claim 1, wherein as metal phosphate hardener condensed aluminum phosphate and condensed iron/aluminum phosphate is used.

6. A process for applying an acid-resistant fast-setting one-component cement to selected surfaces by introducing a one-component alkali metal silicate cement into the feed compartment of a concrete gun or sprayer, putting the feed compartment under pressure by means of compressed air, transferring the dry cement in measured amounts from the feed compartment to the nozzle of the sprayer by means of a hose, introducing water into the sprayer nozzle from a pressurized water supply line, in order to mix the water with the cement, applying the mixture of alkali metal silicate cement and water to the selected surface, and allowing the cement to set, characterized by using a one-component alkali metal silicate cement as claimed in claim 1.